# FASCICULE DE BREVET EUROPEEN

(11) **EP 2 911 931 B1**
(45) Date de publication et mention de la délivrance du brevet: **30.11.2016**
(21) Numéro de dépôt: 13786297.5
(22) Date de dépôt: 15.10.2013
(51) Int. Cl.: B62D 25/08, B62D 43/10, B62D 25/20

(54) **AGENCEMENT POUR LA FIXATION D'UN BAC DE ROUE DE SECOURS DE VEHICULE AUTOMOBILE**
ANORDNUNG ZUR BEFESTIGUNG EINES RESERVERADWANNE EINES KRAFTFAHRZEUGS
ARRANGEMENT FOR SECURING A SPARE WHEEL WELL OF A MOTOR VEHICLE

(30) Priorité: 24.10.2012 FR 1260121
(43) Date de publication de la demande: 02.09.2015
(73) Titulaire: Renault S.A.S., 92100 Boulogne-Billancourt (FR)
(72) Inventeur: BUCUR, Radu, R-6 Bucuresti Sect. 6 (RO); BURTUMAC, Gheorghe-Valentin, R-110356 Pitesti (RO)
(86) Numéro de dépôt international: PCT/FR2013/052462
(87) Numéro de publication internationale: WO 2014/064368

(56) Documents cités:
- WO-A1-2012/010769
- GB-A- 2 486 521
- US-A1- 2011 227 367

## Description

L'invention se rapporte à un agencement pour la fixation d'un bac de roue de secours de véhicule automobile. Plus particulièrement, l'invention se rapporte à un agencement pour la fixation d'un bac de roue de secours destiné à recevoir un réservoir.

Le document GB 2486521 A divulgue le préambule de la revendication 1.

Dans un exemple connu d'agencement pour la fixation d'un bac de roue de secours de véhicule automobile, ledit bac de roue de secours est destiné à recevoir un réservoir et repose sur un plancher dudit véhicule. Ledit véhicule comporte au moins une traverse sur laquelle est soudé un compensateur de freinage.

Cet agencement présente l'inconvénient de solliciter le plancher qui doit supporter la masse du bac de roue de secours et du réservoir. Le plancher doit aussi assurer la tenue mécanique de l'ensemble bac de roue de secours et réservoir afin d'éviter toutes fissures du réservoir, pour des raisons de sécurité. Pour remédier à ces inconvénients, certaines parties des moyens de fixation du réservoir sur le bac de roue de secours ont été modifiées par une augmentation de matière afin d'améliorer la tenue mécanique. De plus, des plots en caoutchouc ont également été ajoutés dans le bac de roue de secours sur certaines zones à proximité du réservoir. Toutefois, de telles solutions ne s'avèrent pas complètement satisfaisantes notamment en termes de vibrations acoustiques, de tenue mécanique ou de poids.

Un autre inconvénient est le soudage d'une pièce sur la traverse, pour fixer le compensateur de freinage, qui nécessite une étape de montage dans le procédé de montage du véhicule et qui augmente le poids du véhicule par l'introduction de la pièce dédiée uniquement à la fixation dudit compensateur.

De plus, suivant le type de véhicule, la partie arrière du véhicule est particulièrement sollicitée, comme par exemple les véhicules de type break. Le bac de roue de secours, généralement situé à l'arrière, est également soumis à des contraintes mécaniques fortes, d'autant plus lorsque le bac de roue de secours comporte un réservoir supplémentaire qui alourdit la charge à supporter.

L'invention propose ainsi un agencement obviant ces problèmes, c'est-à-dire un agencement ayant une bonne tenue mécanique sans augmenter la masse, tout en permettant également de supprimer la pièce dédiée à la fixation du compensateur.

Plus particulièrement, l'invention a pour objet un agencement pour la fixation d'un bac de roue de secours de véhicule automobile. Ledit bac de roue de secours est destiné à recevoir un réservoir et à reposer sur un plancher dudit véhicule. Ledit véhicule comporte au moins une traverse. Selon une caractéristique générale, l'agencement comporte une première et une seconde pièces de fixation destinées à être fixées sur ladite traverse, une première et une deuxième pièces de liaison destinées à être fixées sur le bac de roue de secours, lesdites première et seconde pièces de liaison étant respectivement fixées sur lesdites première et seconde pièces de fixation. Un dispositif agissant sur le freinage est fixé sur l'une des premières ou secondes pièces de fixation ou de liaison.

L'invention peut comporter l'une des caractéristiques techniques ou toutes combinaisons des caractéristiques techniques suivantes :
- le réservoir peut être un réservoir pour gaz de pétrole liquéfié,
- les première et seconde pièces de liaison peuvent être fixées sur une même face extérieure du bac de roue de secours, ladite face extérieure étant opposée à une face intérieure définissant un bac destiné à recevoir une roue de secours,
- les première et seconde pièces de liaison peuvent comporter une forme complémentaire de la forme de la surface extérieure du bac de roue de secours sur laquelle les première et seconde pièces de liaison sont destinées à être fixées,
- les première et seconde pièces de liaison peuvent s'étendre d'une face verticale du bac de roue de secours à une face horizontale du bac de roue de secours,
- les première et seconde pièces de liaison peuvent être respectivement fixées sur lesdites première et seconde pièces de fixation par des moyens de solidarisation démontables,
- les moyens de solidarisation démontables peuvent comporter au moins une vis et un boulon pour les premières pièces respectivement de fixation et de liaison et au moins une vis et un boulon pour les secondes pièces respectivement de fixation et de liaison,
- les première et seconde pièces de fixation peuvent être soudées à la traverse,
- les première et seconde pièces de liaison peuvent être soudées au bac de roue de secours.

D'autres caractéristiques et avantages de l'invention apparaîtront à la lecture de la description détaillée qui va suivre, donnée à titre d'exemple non limitatif. Pour sa compréhension, on se reportera aux dessins annexes dans lesquels :
- la figure 1 est une représentation schématique d'un agencement pour la fixation d'un bac de roue de secours de véhicule automobile selon l'invention,
- la figure 2 est une représentation schématique de l'agencement selon la figure 1 avant la fixation du bac de roue de secours,
- la figure 3 est une représentation schématique d'une fixation d'un dispositif agissant sur le freinage associé à l'agencement selon les figures 1 et 2.

Dans la description qui va suivre, pour faciliter sa compréhension ainsi que celle des revendications, on adoptera à titre non limitatif les orientations longitudinale, verticale et transversale, respectivement L, V et T, selon le trièdre direct indiqué aux figures. Dans la description qui va suivre, des éléments identiques, analogues ou similaires seront désignés par les mêmes références.

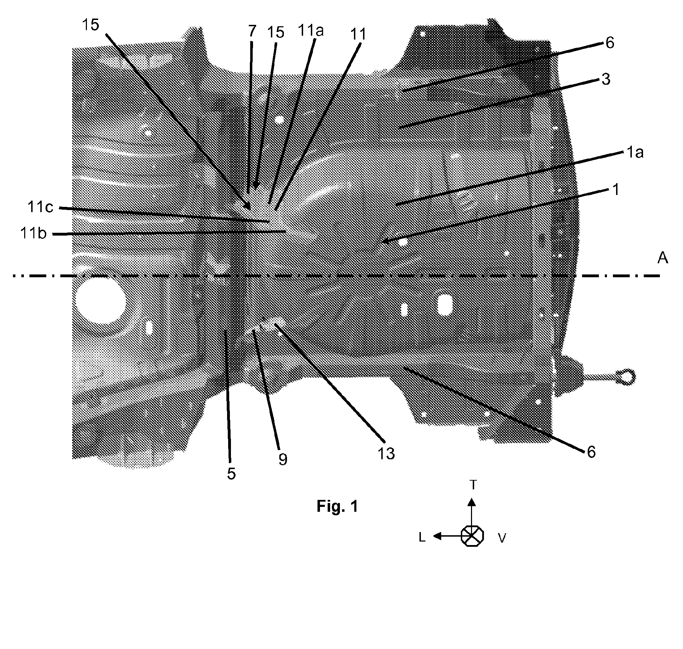

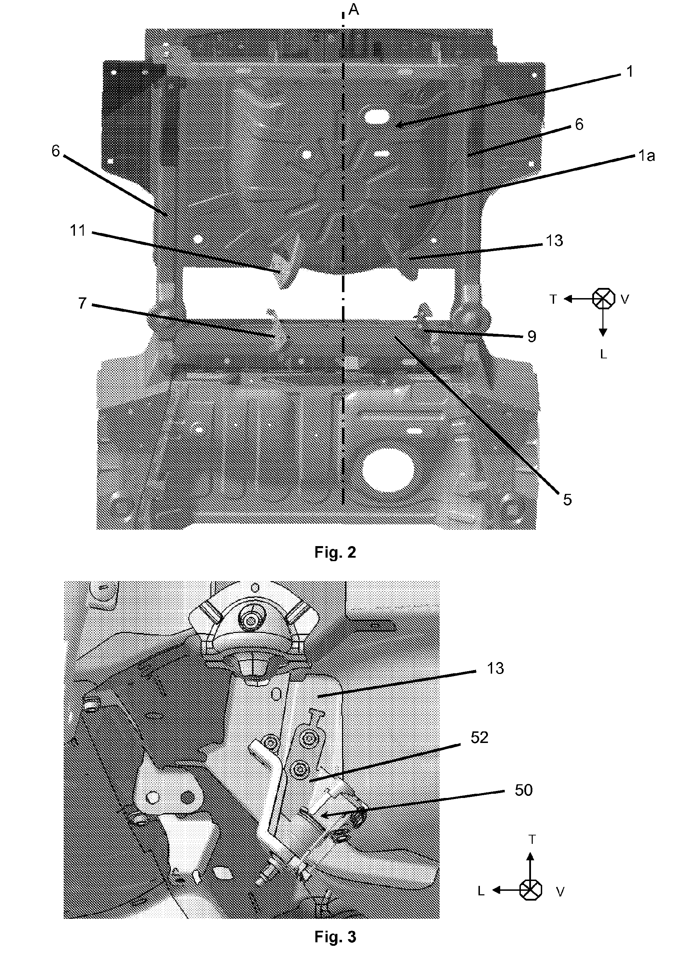

Un mode de réalisation de l'invention est illustré aux figures 1 et 2 qui représentent un agencement pour la fixation d'un bac de roue de secours 1 de véhicule automobile. Le bac de roue de secours 1 est destiné à recevoir un réservoir (non représenté pour des raisons de clarté). Plus particulièrement, le réservoir est un réservoir pour gaz de pétrole liquéfié ou GPL. Le bac de roue de secours 1 repose sur un plancher 3 du véhicule. Dans l'exemple, le réservoir et le plancher 3 sont venus de matière, ce qui est avantageux puisqu'il n'est pas nécessaire d'effectuer d'opération d'assemblage supplémentaire. Le bac de roue de secours 1 comporte une face extérieure 1a opposée à une face intérieure définissant un bac destiné à recevoir une roue de secours.

Comme représenté aux figures 1 et 2, le véhicule comporte une traverse 5 montée entre deux longerons 6.

L'agencement comporte une première 7 et une seconde 9 pièces de fixation destinées à être fixées sur la traverse 5, par exemple par soudage. L'agencement comporte, en outre, une première 11 et une seconde 13 pièces de liaison destinées à être fixées sur le bac de roue de secours 1. Dans l'exemple illustré, les première 11 et seconde 13 pièces de liaison sont fixées sur une même face extérieure 1a du bac de roue de secours 1 par soudage. Les première 11 et seconde 13 pièces de liaison sont respectivement fixées sur lesdites première 7 et seconde 9 pièces de fixation par des moyens de fixation ou de solidarisation démontables, du type vis-écrou.

Les premières pièces 7, 11, respectivement de fixation et de liaison, et les secondes pièces 9, 13, respectivement de fixation et de liaison, sont situées de part et d'autre d'un axe A, parallèle à l'axe longitudinal L et passant sensiblement par le milieu du bac de roue de secours 1.

Les première 11 et seconde 13 pièces de liaison comportent une forme complémentaire à la forme de la surface extérieure 1a du bac de roue de secours 1 sur laquelle les première 11 et seconde 13 pièces de liaison sont destinées à être fixées.

Dans le mode de réalisation représenté aux figures 1 et 2, les première 11 et seconde 13 pièces de liaison comportent essentiellement trois parties (dans un souci de clarté les différentes parties comporteront la référence de la pièce de fixation auquel elles sont associées, suivie d'une lettre propre à chacune des parties et seule la première pièce de liaison 11 va ainsi être décrite). La première pièce de liaison 11 comprend donc :
- une première partie 11a s'étendant sensiblement parallèlement à l'axe vertical V,
- une deuxième partie 11b s'étendant sensiblement parallèlement à un plan horizontal (passant par les axes longitudinal L et transversale T), et
- une troisième partie 11c qui s'étend entre la première partie 11a et la deuxième partie 11b.

Les trois parties 11a, 11b, 11c comportent ainsi une forme complémentaire à celle de la face extérieure 1a du bac de roue de secours 1, c'est-à-dire une forme de sorte à épouser la surface extérieure du bac de roue de secours 1. Ceci présente l'avantage d'améliorer la tenue mécanique du bac de roue de secours 1 et de limiter l'encombrement de l'agencement.

Les première 11 et seconde 13 pièces de liaison sont respectivement fixées sur lesdites première 7 et seconde 9 pièces de fixation par des moyens de solidarisation démontables 15. Dans l'exemple illustré, les moyens de solidarisation démontables 15 comportent au moins une vis et un boulon pour les premières pièces 7, 11, respectivement de fixation et de liaison, et au moins une vis et un boulon pour les secondes pièces 9, 13, respectivement de fixation et de liaison. Ces moyens de solidarisation démontables 15 présentent l'avantage d'être faciles à monter et à démonter, notamment dans un espace difficilement accessible.

Cet agencement présente l'avantage d'améliorer la tenue mécanique grâce à la reprise d'une partie des contraintes mécanique du bac de roue de secours 1 par la traverse 5, mais également d'augmenter le premier mode de torsion de 1 Hz ce qui contribue en plus à améliorer la tenue mécanique.

Par ailleurs, comme représenté à la figure 3, l'agencement selon l'invention comporte avantageusement un dispositif 50 agissant sur le freinage, tel qu'un compensateur de freinage, fixé par exemple, sur la seconde pièce de liaison 13 par l'intermédiaire d'un élément 52 du type plaque de support.

Selon d'autres modes de réalisation non représentés, le compensateur de freinage peut être fixé sur l'une des premières ou secondes pièces de fixation ou de liaison.

L'invention n'est pas limitée aux différents modes de réalisation décrits ci-dessus. Notamment, le nombre et la forme des pièces de fixation et de liaison peuvent être différents, tant qu'elles permettent d'assurer une tenue mécanique de l'agencement.

L'agencement selon l'invention s'applique à tout type de véhicule automobile, plus particulièrement à un véhicule automobile destiné à recevoir un réservoir GPL à l'intérieur du bac de roue de secours dévolue normalement au logement de la roue de secours et au véhicule de type break.

## Revendications

1. Agencement pour la fixation d'un bac de roue de secours (1) de véhicule automobile, ledit bac de roue de secours (1) étant destiné à recevoir un réservoir et reposant sur un plancher (3) dudit véhicule, ledit véhicule comportant au moins une traverse (5), ledit agencement comportant une première (7) et une seconde (9) pièces de fixation destinées à être fixées sur ladite traverse (5), et une première (11) et une seconde (13) pièces de liaison destinées à être fixées sur le bac de roue de secours (1), lesdites première (11) et seconde (13) pièces de liaison étant respectivement fixées sur lesdites première (7) et seconde (9) pièces de fixation, agencement **caractérisé en ce qu'**un dispositif (50) agissant sur le freinage est fixé sur l'une des premières (7, 11) ou secondes pièces (9, 13) de fixation ou de liaison.

2. Agencement selon la revendication 1, **caractérisé en ce que** le réservoir est un réservoir pour gaz de pétrole liquéfié.

3. Agencement selon la revendication 1 ou 2, **caractérisé en ce que** les première (11) et seconde (13) pièces de liaison sont fixées sur une même face extérieure (1a) du bac de roue de secours (1), ladite face extérieure (1a) étant opposée à une face intérieure définissant un bac destiné à recevoir une roue de secours.

4. Agencement selon l'une des revendications 1 à 3, **caractérisé en ce que** les première (11) et seconde (13) pièces de liaison comportent une forme complémentaire de la forme de la surface extérieure (1a) du bac de roue de secours (1) sur laquelle les première (11) et seconde (13) pièces de liaison sont destinées à être fixées.

5. Agencement selon l'une des revendications 1 à 4, **caractérisé en ce que** les première (11) et seconde (13) pièces de liaison s'étendent d'une face verticale du bac de roue de secours (1) à une face horizontale du bac de roue de secours (1).

6. Agencement selon l'une des revendications 1 à 5, **caractérisé en ce que** les première (11) et seconde (13) pièces de liaison sont respectivement fixées sur lesdites première (7) et seconde (9) pièces de fixation par des moyens de solidarisation démontables (15).

7. Agencement selon la revendication 6, **caractérisé en ce que** les moyens de solidarisation démontables (15) comportent au moins une vis et un boulon pour les premières pièces (7, 11) respectivement de fixation et de liaison et au moins une vis et un boulon pour les secondes pièces (9, 13) respectivement de fixation et de liaison.

8. Agencement selon l'une des revendications 1 à 7, **caractérisé en ce que** les première (7) et seconde (9) pièces de fixation sont soudées à la traverse (5).

9. Agencement selon l'une des revendications 1 à 8, **caractérisé en ce que** les première (11) et seconde (13) pièces de liaison sont soudées au bac de roue de secours (1).

## Patentansprüche

1. Anordnung zur Befestigung einer Reserveradwanne (1) eines Kraftfahrzeugs, wobei die Reserveradwanne (1) dazu bestimmt ist, einen Tank aufzunehmen, und auf einem Boden (3) des Fahrzeugs ruht, wobei das Fahrzeug mindestens eine Traverse (5) aufweist, wobei die Anordnung ein erstes (7) und ein zweites (9) Befestigungsteil, die dazu bestimmt sind, an der Traverse (5) befestigt zu sein, und ein erstes (11) und ein zweites (13) Verbindungsteil, die dazu bestimmt sind, an der Reserveradwanne (1) befestigt zu sein, aufweist, wobei das erste (11) und zweite (13) Verbindungsteil jeweils an dem ersten (7) und zweiten (9) Befestigungsteil befestigt sind, Anordnung **dadurch gekennzeichnet, dass** eine Vorrichtung (50), die auf die Bremsung einwirkt, an einem der ersten (7, 11) oder zweiten (9, 13) Befestigungs- oder Verbindungsteile befestigt ist.

2. Anordnung nach Anspruch 1, **dadurch gekennzeichnet, dass** der Tank ein Tank für verflüssigtes Petrolgas ist.

3. Anordnung nach Anspruch 1 oder 2, **dadurch gekennzeichnet, dass** das erste (11) und zweite (13) Verbindungsteil an einer gleichen Außenseite (1a) der Reserveradwanne (1) befestigt sind, wobei die Außenseite (1a) gegenüber einer Innenseite, die eine Wanne definiert, die dazu bestimmt ist, ein Reserverad aufzunehmen, angeordnet ist.

4. Anordnung nach einem der Ansprüche 1 bis 3, **dadurch gekennzeichnet, dass** das erste (11) und zweite (13) Verbindungsteil eine komplementäre Form zu der Form der Außenfläche (1a) der Reserveradwanne (1), an der das erste (11) und zweite (13) Verbindungsteil befestigt zu werden bestimmt sind, aufweisen.

5. Anordnung nach einem der Ansprüche 1 bis 4, **dadurch gekennzeichnet, dass** das erste (11) und zweite (13) Verbindungsteil sich von einer senkrechten Fläche der Reserveradwanne (1) zu einer horizontalen Fläche der Reserveradwanne (1) erstrecken.

6. Anordnung nach einem der Ansprüche 1 bis 5, **dadurch gekennzeichnet, dass** das erste (11) und zweite (13) Verbindungsteil jeweils an dem ersten (7) und zweiten (9) Befestigungsteil durch demontierbare Mittel zur festen Verbindung (15) befestigt sind.

7. Anordnung nach Anspruch 6, **dadurch gekennzeichnet, dass** die demontierbaren Mittel zur festen Verbindung (15) mindestens eine Schraube und einen Bolzen für das erste Befestigungs- beziehungsweise Verbindungsteil (7, 11) und mindestens eine Schraube und einen Bolzen für das zweite Befestigungs- beziehungsweise Verbindungsteil (9, 13) aufweisen.

8. Anordnung nach einem der Ansprüche 1 bis 7, **dadurch gekennzeichnet, dass** das erste (7) und zweite (9) Befestigungsteil an der Traverse (5) verschweißt sind.

9. Anordnung nach einem der Ansprüche 1 bis 8, **dadurch gekennzeichnet, dass** das erste (11) und zweite (13) Verbindungsteil an der Reserveradwanne (1) verschweißt sind.

## Claims

1. Arrangement for securing a spare wheel well (1) of a motor vehicle, said spare wheel well (1) being intended to house a container and to rest on a floor (3) of said vehicle, said vehicle including at least one cross member (5), said arrangement including a first securing part (7) and a second securing part (9) which are intended to be secured to said cross member (5), and a first connecting part (11) and a second connecting part (13) which are intended to be secured to the spare wheel well (1), said first connecting part (11) and second connecting part (13) being secured respectively to said first securing part (7) and second securing part (9), the arrangement being **characterized in that** a device (50) for controlling the braking is secured to one of the first (7, 11) or second (9, 13) securing or connecting parts.

2. Arrangement according to Claim 1, **characterized in that** the container is a container for liquefied petroleum gas.

3. Arrangement according to Claim 1 or 2, **characterized in that** the first connecting part (11) and the second connecting part (13) are secured to the same external surface (1a) of the spare wheel well (1), said external surface (1a) being opposite an internal surface defining a well intended to house a spare wheel.

4. Arrangement according to one of Claims 1 to 3, **characterized in that** the first connecting part (11) and the second connecting part (13) have a form that is complementary to the form of the external surface (1a) of the spare wheel well (1), to which the first connecting part (11) and the second connecting part (13) are intended to be secured.

5. Arrangement according to one of Claims 1 to 4, **characterized in that** the first connecting part (11) and the second connecting part (13) extend from a vertical surface of the spare wheel well (1) to a horizontal surface of the spare wheel well (1).

6. Arrangement according to one of Claims 1 to 5, **characterized in that** the first connecting part (11) and the second connecting part (13) are secured respectively to said first securing part (7) and second securing part (9) by removable attachment means (15).

7. Arrangement according to Claim 6, **characterized in that** the removable attachment means (15) include at least one screw and one bolt for the first (7, 11) securing and connecting parts respectively and at least one screw and one bolt for the second (9, 13) securing and connecting parts respectively.

8. Arrangement according to one of Claims 1 to 7, **characterized in that** the first securing part (7) and the second securing part (9) are welded to the cross member (5).

9. Arrangement according to one of Claims 1 to 8, **characterized in that** the first connecting part (11) and the second connecting part (13) are welded to the spare wheel well (1).
